# EUROPEAN PATENT APPLICATION

(11) **EP 4 768 831 A1**
(43) Date of publication of application: **01.07.2026**
(21) Application number: 25196353.4
(22) Date of filing: 18.08.2025
(51) Int. Cl.: F25D 27/00, F25D 29/00

(54) **CAMERA ASSEMBLY AND REFRIGERATOR HAVING SAME**

(30) Priority: 26.12.2024 KR 20240197687
(71) Applicant: LG Electronics Inc., Yeongdeungpo-gu Seoul 07336 (KR)
(72) Inventor: KIM, Jeonghwan, 08592 Seoul (KR); LIM, Ki Young, 08592 Seoul (KR); HA, SeungPyo, 08592 Seoul (KR)
(74) Representative: Schott, Jakob Valentin

(57) **Abstract**

Proposed is refrigerator in which a camera assembly capable of accurately capturing images of items moved into or out of a storage compartment is installed to be accommodated in an inner casing so as not to protrude into the storage compartment or to minimize a protruding height thereof, thereby preventing deterioration in aesthetics.

## Description

### CROSS REFERENCE TO RELATED APPLICATION

The present application claims priority to Korean Patent Application No. 10-2024-0197687, filed December 26, 2024, the entire contents of which are incorporated herein for all purposes by this reference.

### BACKGROUND OF THE INVENTION

### Field of the Invention

The present disclosure relates to a camera assembly, which are capable of recognizing, in real time, information on food, groceries, or stored items that are taken into or out of a storage compartment, and providing such information to a user as needed, and a refrigerator having the camera assembly.

### Description of the Related Art

In general, a refrigerator is a home appliance that supplies cold air to stored items so that the items can be stored for a long time. Such a refrigerator provides at least one storage compartment in which items are stored, and the storage compartment is configured to be opened and closed by a door.

When the door is opened, lighting provided inside the storage compartment is turned on, thereby illuminating the interior of the storage compartment. As a result, a user can accurately recognize the type and location of stored items within the storage compartment.

Meanwhile, recent refrigerators are becoming multifunctional, not merely performing the function of storing items, but also additionally providing various types of information related to the stored items.

For example, as disclosed in Korean Patent Application Publication No. 10-2014-0120386, Korean Patent Application Publication No. 10-2020-0013746, Korean Patent Application Publication No. 10-2021-0137592, Korean Patent No. 10-2273192, Korean Patent Application Publication No. 10-2024-0051573, and Korean Patent Application Publication No. 10-2024-0051575, various technologies have been proposed to recognize stored items on the basis of captured images by capturing the images of the interior of the storage compartment with a camera.

According to the aforementioned prior arts, there is a disadvantage that a plurality of cameras must be used to capture stored items placed at various locations within a storage compartment.

Accordingly, there is a need for technology that recognizes items being placed into or taken out of a storage compartment by using a minimal number of cameras.

For example, according to the technology, a camera is placed at an optimal position so that items being placed into or taken out of a storage compartment are accurately recognized by a minimal number of cameras.

In addition, in the prior arts, lighting provided inside the storage compartment uniformly illuminates the entire area of the interior of the storage compartment without considering the shooting angle of a camera. Accordingly, depending on a position at which an item is placed into or taken out of the compartment, a shadow may be cast on the item when the camera is photographing the item. That is, due to the shadow appearing in a captured image, it has been difficult to accurately recognize the item.

Additionally, a camera provided in a conventional refrigerator is mainly located at the front upper portion of the interior of a storage compartment. However, in a recent refrigerator, a main PCB for controlling the refrigerator is provided at the front upper side of a main body, and thus the installation structure of the camera must take into account the location and wiring of the main PCB.

### Documents of Related Art

(Patent Document 1) Korean Patent Application Publication No. 10-2014-0120386
(Patent Document 2) Korean Patent Application Publication No. 10-2020-0013746
(Patent Document 3) Korean Patent Application Publication No. 10-2021-0137592
(Patent Document 4) Korean Patent No. 10-2273192
(Patent Document 5) Korean Patent Application Publication No. 10-2024-0051573
(Patent Document 6) Korean Patent Application Publication No. 10-2024-0051575

### SUMMARY OF THE INVENTION

The present disclosure has been devised to solve various problems associated with the above-described prior art, and has the following objectives.

An objective of the present disclosure is to provide a novel type of camera assembly which may accurately capture images of items being taken into or out of a storage compartment by improving the arrangement structure of a camera, and a refrigerator having the camera assembly.

An objective of the present disclosure is to provide a novel type of camera assembly which may be easily and accurately installed, and a refrigerator having the camera assembly.

An objective of the present disclosure is to provide a novel type of camera assembly that may be protected from external environments, and a refrigerator having the camera assembly.

An objective of the present invention is to provide a novel type of camera assembly, in which a camera and a discharge grille for discharging cold air form a single assembly, and a refrigerator having the camera assembly.

In order to achieve the objectives of the present disclosure, there is provided a refrigerator of the present disclosure which includes a camera assembly for capturing images of items in a storage compartment. The camera assembly may have a camera module. Accordingly, images of items that are stored in the storage compartment or are taken into or out of the storage compartment may be captured.

According to the refrigerator of the present disclosure, the camera assembly may be detachably coupled to an inner casing. Accordingly, the camera assembly may be selectively mounted and removed.

According to the refrigerator of the present disclosure, the camera assembly may be formed to be detachable from inside the inner casing. Accordingly, maintenance of the camera assembly may be easily performed.

According to the refrigerator of the present disclosure, the camera assembly may be installed so as not to protrude from an inner surface of the inner casing. To this end, the surface of the camera assembly exposed to the storage compartment may be positioned on the same surface as the inner surface of the inner casing. Accordingly, the aesthetics of the interior design of the storage compartment may be prevented from being deteriorated.

According to the refrigerator of the present disclosure, the camera assembly may be installed to be recessed inward from the interior of the inner casing. To this end, the inner casing may include a recessed portion recessed to accommodate the camera assembly. Accordingly, the camera assembly may not protrude into the storage compartment, or a protruding portion of the camera assembly into the storage compartment may be minimized.

According to the refrigerator of the present disclosure, the camera assembly may be installed on the outside of the inner casing and be exposed to the interior of the inner casing. To this end, the inner casing may include an exposure hole through which the camera assembly is exposed, and the camera assembly may be installed so that at least a portion thereof is exposed to the interior of the storage compartment through the exposure hole. Accordingly, the assembly of the camera assembly may be performed easily.

According to the refrigerator of the present disclosure, when the camera assembly is installed on the outside of the inner casing, the outer surface of the camera assembly may be configured to be covered by a coupling cover. Accordingly, damage to the camera assembly may be prevented during the process of filling foam between the inner casing and the outer casing.

According to the refrigerator of the present disclosure, the coupling cover may be detachably installed on the outer surface of the inner casing.

According to the refrigerator of the present disclosure, the camera assembly may be installed to be detachable from the inside of the coupling cover. Accordingly, the camera assembly may be replaced or repaired.

According to the refrigerator of the present disclosure, the camera assembly may include a base cover provided as a body portion. The camera module may be mounted to a first mounting portion provided by the base cover.

According to the refrigerator of the present disclosure, the camera assembly may include the camera module for capturing images. The camera module may be installed on the first mounting portion of the base cover.

According to the refrigerator of the present disclosure, the first mounting portion may be formed as a hole penetrating the base cover. Accordingly, the outer surface of the camera module may be installed to be exposed to the outside of the base cover.

According to the refrigerator of the present disclosure, the base cover may include an intake port to which a cold air duct is connected. Accordingly, cold air supplied into the storage compartment may be introduced through the intake port. Accordingly, cold air supplied into the storage compartment may be introduced through the intake port.

According to the refrigerator of the present disclosure, the cold air duct may be connected to one side portion of the base cover. The intake port may be formed on one side of the first mounting portion, and the cold air duct may be connected thereto.

According to the refrigerator of the present disclosure, the base cover may be provided with a discharge grille configured to guide the discharge flow of cold air into the storage compartment. Accordingly, air introduced into the base cover through the intake port may be discharged toward a predetermined region within the storage compartment.

According to the refrigerator of the present disclosure, the discharge grille may be provided on at least one side portion of the first mounting portion. The discharge grille may be provided only on one side portion of the first mounting portion or on each of opposite side portions thereof. Cold air may not be discharged through at least one discharge grille.

According to the refrigerator of the present disclosure, the camera assembly may further include a first lighting module. Accordingly, lighting for capturing images by the camera module may be provided.

According to the refrigerator of the present disclosure, the first lighting module may be mounted to the base cover. Accordingly, the first lighting module and the camera module may be provided as a single module.

According to the refrigerator of the present disclosure, the first lighting module may be positioned in front of the camera module, behind the camera module, or both in front of and behind the camera module.

According to the refrigerator of the present disclosure, the camera assembly may be provided separately from a second lighting module for lighting inside the storage compartment.

According to the refrigerator of the present disclosure, the camera assembly may be positioned in front of the second lighting module.

In order to achieve the above objectives, the camera assembly for a refrigerator of the present disclosure may include: the base cover having the intake port configured to receive a portion of cold air; the camera module installed on the base cover for capturing images; and the discharge grille installed on the base cover to guide the discharge flow of air drawn in through the intake port.

According to the camera assembly for a refrigerator of the present disclosure, the camera module may be installed so as to be exposed to the outside of the base cover.

According to the camera assembly for a refrigerator of the present disclosure, the discharge grille may be provided on at least one side portion of the camera module.

According to the camera assembly for a refrigerator of the present disclosure, the base cover may be provided with the first lighting module that provides lighting during capturing by the camera module.

As described above, according to the refrigerator of the present disclosure, the surface (lower surface) of the camera assembly may be installed to be approximately aligned with the upper surface of the interior of the inner casing, thereby preventing deterioration in aesthetics of the interior of the storage compartment.

According to the refrigerator of the present disclosure, the camera assembly may not protrude into the storage compartment, thereby preventing damage caused by items bumping into the camera assembly during placing or removing the items.

According to the refrigerator of the present disclosure, the installation of the camera assembly may be performed easily and accurately.

According to the refrigerator of the present disclosure, the camera module and the discharge grille may be provided as a single assembly, thereby reducing manufacturing costs, and preventing deterioration in aesthetics of the interior of the storage compartment.

According to the refrigerator of the present disclosure, the camera assembly may be provided with additional lighting, thereby enabling more accurate image capturing.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view showing the external structure of a refrigerator according to an embodiment of the present disclosure;
FIG. 2 is a perspective view illustrating the internal state of an inner casing of the refrigerator according to an embodiment of the present disclosure;
FIG. 3 is a perspective view illustrating a state in which a camera assembly is installed in the inner casing of the refrigerator according to an embodiment of the present disclosure;
FIG. 4 is an enlarged view of portion "A" of FIG. 3;
FIG. 5 is a perspective view of the inner casing viewed from the bottom side to illustrate the state in which the camera assembly is installed in the inner casing of the refrigerator according to an embodiment of the present disclosure;
FIG. 6 is an enlarged view of portion "B" of FIG. 5;
FIG. 7 is a cross-sectional view illustrating the internal state of the inner casing of the refrigerator according to an embodiment of the present disclosure;
FIG. 8 is an enlarged view of portion "C" of FIG. 7;
FIG. 9 is an exploded perspective view of a main part illustrating the state in which the camera assembly is installed in the inner casing of the refrigerator according to an embodiment of the present disclosure;
FIG. 10 is a plan view of the inner casing of the refrigerator according to an embodiment of the present disclosure;
FIG. 11 is a cross-sectional view taken along line A-A of FIG. 10;
FIG. 12 is a perspective view of the camera assembly of the refrigerator according to an embodiment of the present disclosure;
FIG. 13 is an exploded perspective view of the camera assembly of the refrigerator according to an embodiment of the present disclosure;
FIG. 14 is a perspective view of the camera assembly of the refrigerator as viewed from the bottom side according to an embodiment of the present disclosure;
FIG. 15 is an exploded perspective view of the camera assembly of the refrigerator as viewed from the bottom side according to an embodiment of the present disclosure;
FIG. 16 is an enlarged view of a main part illustrating an example of the state in which the camera assembly is installed in the inner casing of the refrigerator according to an embodiment of the present disclosure;
FIG. 17 is an exploded perspective view illustrating a structure in which a first lighting module is provided in the camera assembly of the refrigerator according to an embodiment of the present disclosure; and
FIGS. 18 to 20 illustrate examples of user interface screens provided during the process of moving items into or out of the refrigerator according to an embodiment of the present disclosure.

### DETAILED DESCRIPTION OF THE INVENTION

Embodiments of the present disclosure are described in detail with reference to exemplary drawings. When adding reference numerals to components in each drawing, it should be noted that identical components are given the same reference numerals as much as possible even if they are shown in different drawings.

In addition, when describing the embodiments of the present disclosure, if a detailed description of the relevant known configuration or function is judged to hinder understanding of the embodiments of the present disclosure, detailed descriptions thereof will be omitted.

In addition, in describing the components of the embodiments of the present disclosure, terms such as first, second, A, B, (a), and (b) may be used. These terms are only for distinguishing the components from other components, and the nature or order of the components is not limited by the terms. When a component is described as being "connected" or "coupled" to another component, the component may be directly connected to or coupled to the another component, but it should be understood that still another component may be "connected" or "coupled" thereto between each component.

Hereinafter, preferred embodiments of a refrigerator of the present disclosure will be described with reference to FOGS. 1 to 20.

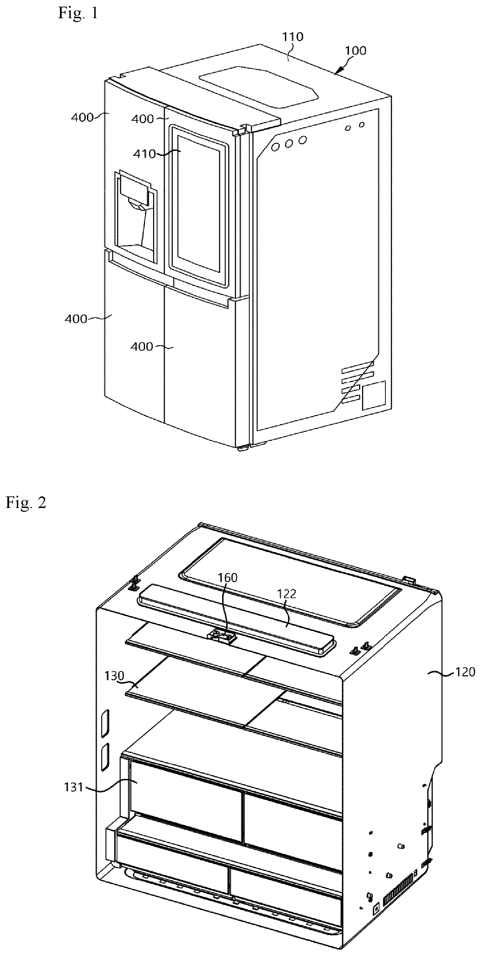

FIG. 1 is a perspective view illustrating a refrigerator according to an embodiment of the present disclosure, and FIG. 2 is a perspective view illustrating the internal structure of an inner casing of the refrigerator according to an embodiment of the present disclosure.

As illustrated in these drawings, the present disclosure is intended to provide a refrigerator having a camera assembly 200 that may accurately capture images of items being taken into or out of a storage compartment without compromising aesthetics of the interior of the storage compartment.

Each component of the camera assembly and the refrigerator having the same according to an embodiment of the present disclosure will be described in more detail.

First, the refrigerator according to an embodiment of the present disclosure may include a cabinet 100 constituting an exterior thereof.

The cabinet 100 may include an outer casing 110 that constitutes the exterior of the refrigerator, and an inner casing 120 provided inside the outer casing 110.

The inner casing 120 may include one inner casing or two or more inner casings. When two or more inner casings 120 are provided, one inner casing and another inner casing may provide storage compartments having different temperature zones. For example, one inner casing 120 may be provided as a freezer compartment, while another inner casing 120 may be provided as a refrigerating compartment.

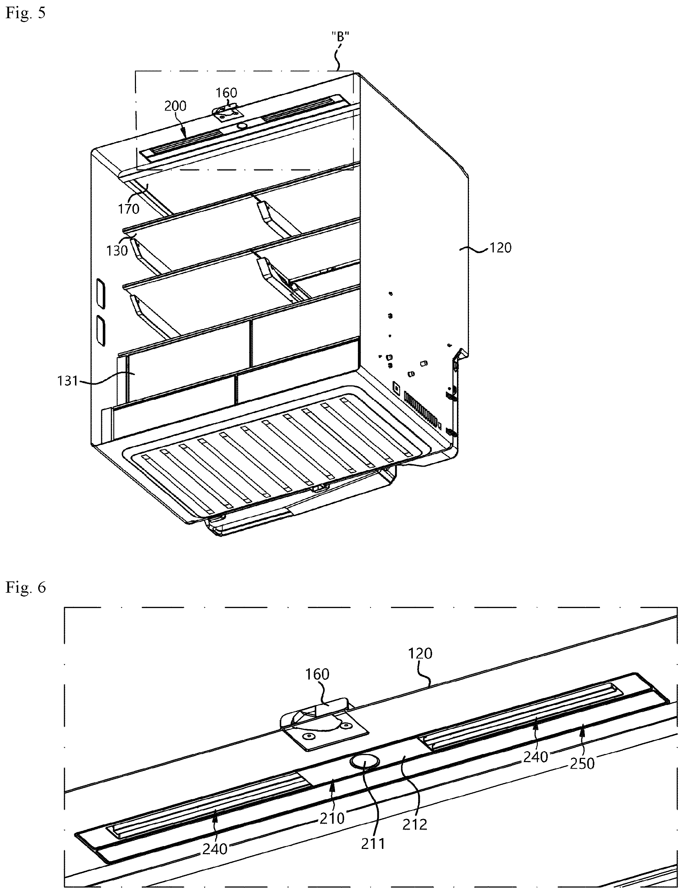

FIGS. 2 to 11 illustrate the exterior and internal structure of the inner casing provided as a refrigerating compartment.

The inner casing 120 may be formed to provide a storage space inside. The storage space may be defined as a storage compartment in which items such as food or beverages are stored.

To this end, the inner casing 120 may be formed in a box-shaped structure with an open front surface. For example, the inner casing 120 may be formed to have an upper surface, a lower surface, a rear surface, and opposite side surfaces.

The storage compartment may be configured to provide a plurality of storage spaces by means of a shelf 130. The shelf 130 may include a plurality of shelves.

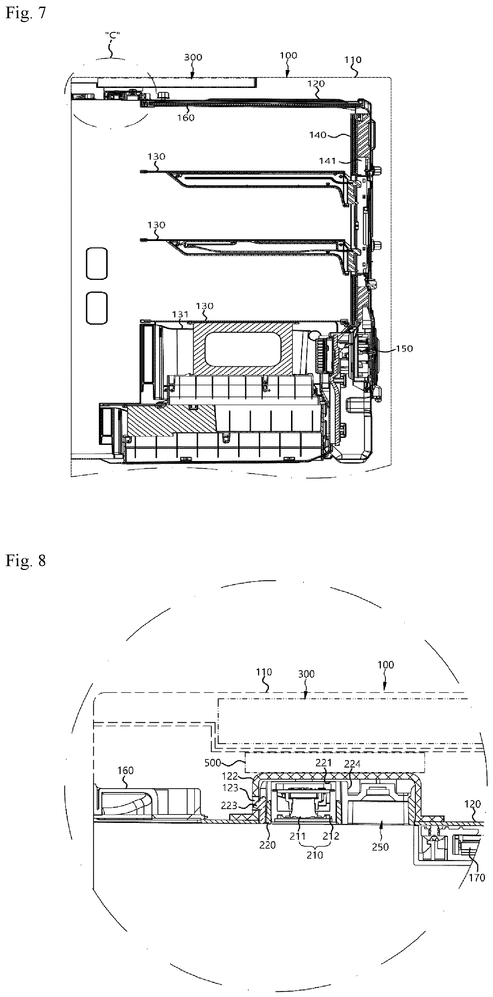

The inner casing 120 may be formed to provide a space through which cold air flows. The space through which the cold air flows may be provided as a space partitioned from the storage compartment. To this end, a multi-duct 140 may be provided at the rear portion inside the inner casing 120 (i.e., the rear of the storage compartment). This is illustrated in FIG. 7.

The multi-duct 140 may be formed to partition the storage compartment from the space, through which cold air flows, at the rear thereof.

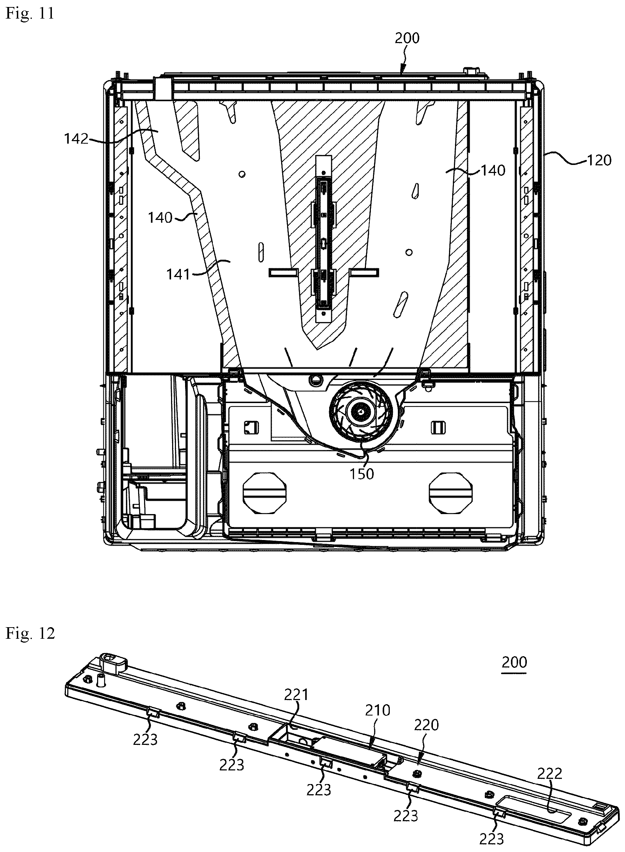

As shown in FIG. 11, the multi-duct 140 may include a main flow path 141. The main flow path 141 may be formed to guide cold air moved by the operation of a blower fan 150.

The main flow path 141 of the multi-duct 140 may include one or two or more main flow paths. The plurality of main flow paths 141 may each be formed to receive cold air from the blower fan 150.

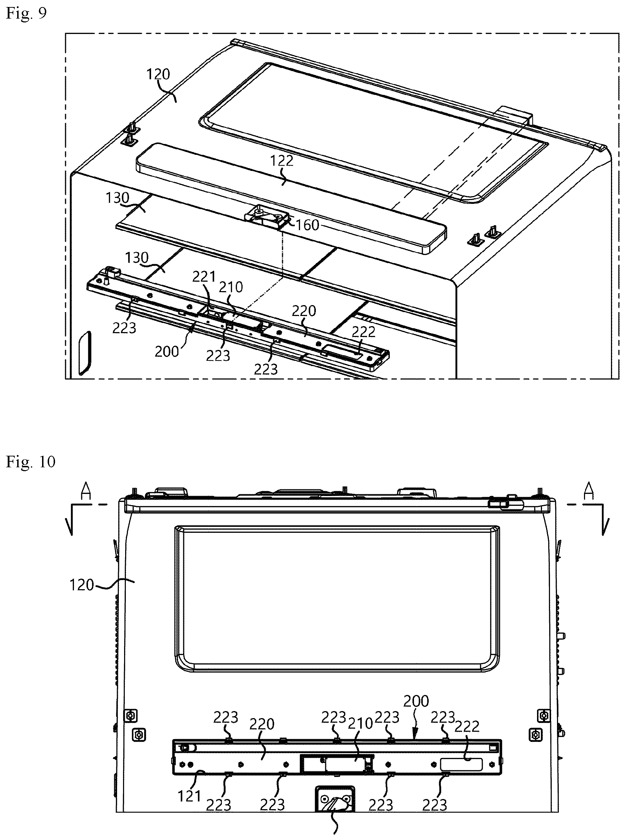

One of the main flow paths 141 may be connected to a branched flow path 142 that guides a portion of the flowing cold air. The branched flow path 142 may be formed to guide the cold air to an upper duct 143 (see FIG. 9) installed along the outer upper surface of the inner casing 120.

The outer casing 110 may be formed to cover the outer surface of the inner casing 120. An insulating material (not shown) may be filled between the inner casing 120 and the outer casing 110. For example, the insulating material may be provided as foam.

Additionally, the storage space (a refrigerating compartment or a freezer compartment) provided by the inner casing 120 may be opened and closed by a door 400.

The door 400 may be provided with the display window 410. The display window 410 may display various types of information provided from a control part 300.

Next, the refrigerator according to an embodiment of the present disclosure may include the camera assembly 200.

The camera assembly 200 may be defined as an assembly including a camera module 210 and a structure for installing the camera module.

The camera module 210 is a module having a lens 211 for photographing items that are either stored inside the storage compartment provided by the inner casing 120 or being taken in and out of the storage compartment.

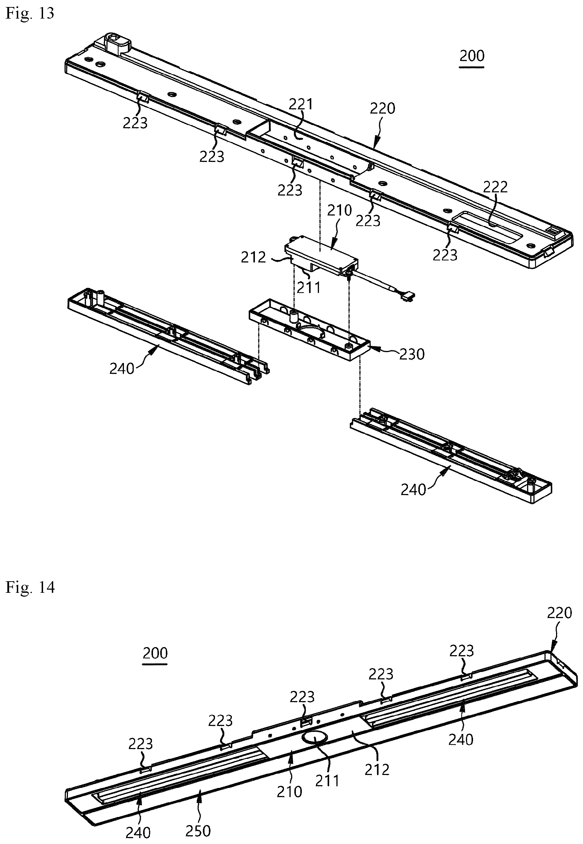

As shown in FIGS. 8, 13, and 15, the camera module 210 may include the lens 211 and a camera body 212. The camera body 212 may be defined as the exterior of the camera module 210 in which the lens 211 is installed and circuit components (not shown) are embedded.

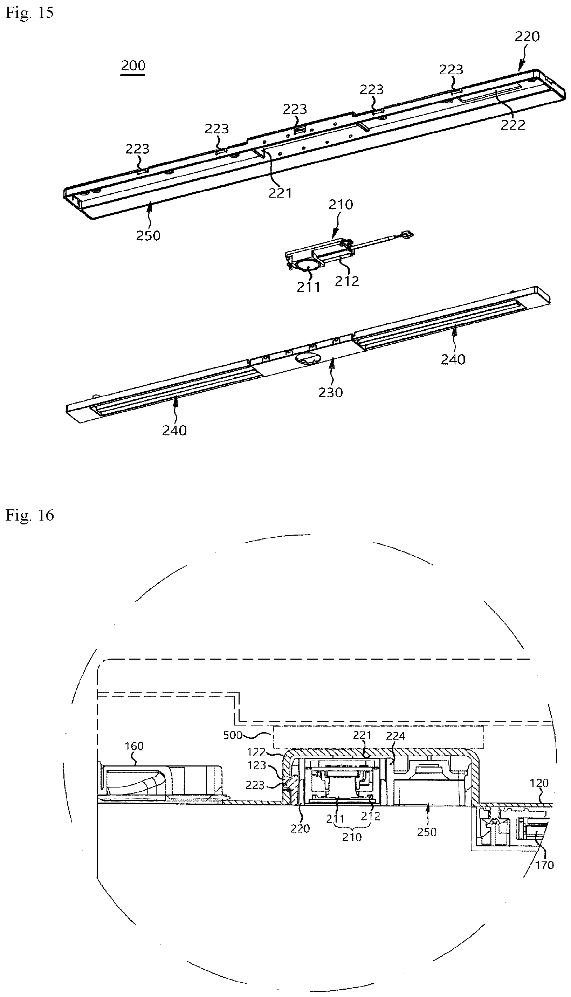

As shown in FIG. 15, a portion of the lower surface of the camera body 212 around the lens 211 may be formed as a curved surface or an inclined surface. That is, by forming the portion of the lower surface of the camera body 212 around the lens 211 as a curved or inclined surface, it is possible to install the camera body 212 in an inclined manner. Preferably, the lower surface of the camera body 212 may be formed to be inclined so that the lens 211 can be tilted in a front-rear direction.

The lens 211 of the camera module 210 may be formed to capture a specific position within the storage compartment. The specific position, which is within the range that the lens 211 is capable of capturing, may be defined as a photo zone. The photo zone may include a position from which at least a portion of an uppermost shelf among the plurality of shelves 130 provided in the storage compartment can be captured. The photo zone may also include a position from which at least a portion of a drawer 131 located below each of the shelves 130 can be captured.

As shown in FIGS. 8, and FIGS. 11 to 15, the structure for installing the camera module 210 may include a base cover 220.

The base cover 220 may be formed as a box-shaped body having an upper surface and peripheral surfaces, with an installation space provided therein. The lower surface of the base cover 220 (the surface facing the storage compartment) may be formed to be open.

A first mounting portion 221 may be provided in at least a portion of the installation space within the base cover 220 so that the camera module 210 is fixedly installed. The first mounting portion 221 may be formed as a recess recessed from the inner surface of the base cover 220 or as a hole penetrating the base cover 220 so as to accommodate the camera module 210. For example, the first mounting portion 221 may be formed as a hole penetrating the base cover 220, and the camera module 210 may be mounted within the first mounting portion 221 such that a lower surface thereof is exposed to the lower portion of the base cover 220 and an upper surface thereof is exposed to the upper portion of the base cover 220. The lens 211 may be located on the lower surface of the camera module 210 exposed to the lower portion of the base cover 220. That is, the lens 211 may be exposed through the first mounting portion 221 to the lower portion of the base cover 220.

The first mounting portion 221 may be located at the central portion of the lower surface of the base cover 220. Accordingly, the lens 211 of the camera module 210 may be positioned at the center of the lower surface of the base cover.

The first mounting portion 221 may further be provided with a camera cover 230 that covers the lower surface of the camera module 210. The camera cover 230 may formed to conceal the remaining portion of the camera module 210 except for the lens 211 from the interior of the storage compartment. That is, in the camera module 210, only the lens 211 may be exposed to the interior of the storage compartment by the camera cover 230.

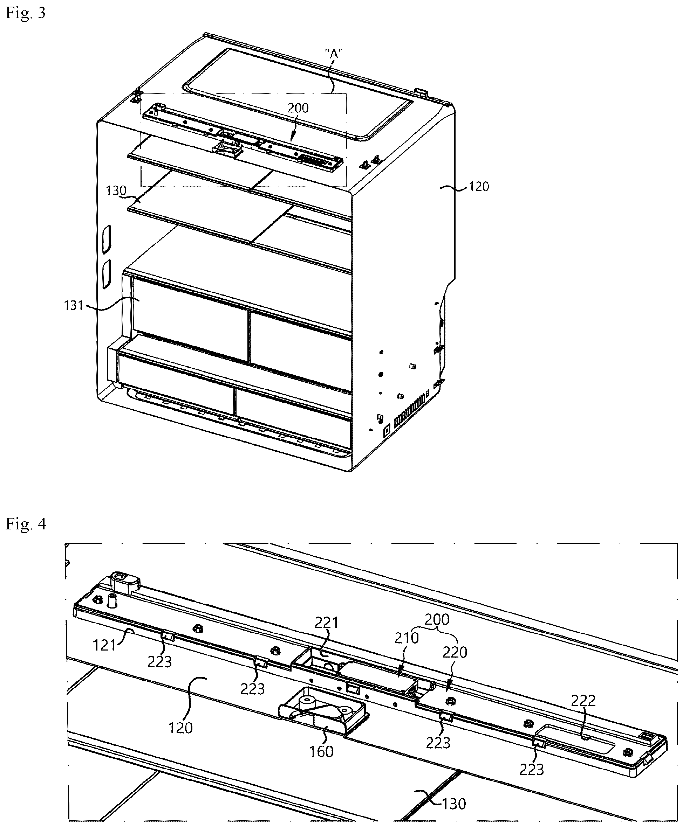

As illustrated in FIGS. 4 and 10, and FIGS. 12 to 15, the base cover 220 may further include an intake port 222 formed therein. The intake port 222 may be defined as a cold air inlet that receives cold air guided through the upper duct 143 installed along the outer upper surface of the inner casing 120.

The intake port 222 may be located at one side portion of the base cover 220. For example, the intake port 222 may be formed on the side portion of the first mounting portion 221 in the upper surface of the base cover 220.

Although not shown, the intake port 222 may be formed on each of the opposite side portions of the first mounting portion 221 in the upper surface of the base cover 220. In this case, although not shown, the upper duct 143 may be provided on each of the opposite sides of the upper surface of the inner casing 120.

In addition, the base cover 220 may be provided with a discharge grille 240 which guides the discharge flow of air drawn in through the intake port 222. The discharge grille 240 may be formed to block the open lower surface of the base cover 220, and may be provided on at least one side portion of the first mounting portion 221 in the lower surface of the base cover 220 is located. Accordingly, cold air introduced into the base cover 220 through the intake port 222 may be discharged into the storage compartment through the discharge grille 240.

The camera assembly 200 may be provided on one surface of the inner casing 120. For example, as illustrated in the embodiment, the camera assembly 200 may be provided on the upper surface of the inner casing 120.

The camera assembly 200 may be positioned at the entrance of the storage compartment. That is, the camera assembly 200 may be located to be adjacent to the open front surface of the inner casing 120. Accordingly, the camera assembly may capture images of items being placed into or removed from the storage compartment.

The camera assembly 200 may be located behind a filler holder 160, which guides the movement of a filler (not shown) during the opening or closing of the door 400 at the entrance of the storage compartment.

The camera assembly 200 may be located under the control part 300 provided at the upper front of the cabinet 100. The control part 300 may include a main PCB having a controller that controls the operation of the refrigerator, and a mounting structure or mounting portion where the main PCB is mounted.

The control part 300 may include an image processing board (not shown) that processes video captured by the camera assembly 200 into images and recognizes information from the images.

The camera assembly 200 may be positioned in front of a second lighting module 170, which provides lighting into the storage compartment, on the upper surface of the inner casing 120. The second lighting module 170 may operate such that when the door 400 is opened, power is supplied and lighting is provided into the storage compartment, and when the door 400 is closed, power is cut off and lighting is stopped.

Meanwhile, the camera assembly 200 may be detachably coupled to the upper surface of the inner casing 120.

For example, the camera assembly 200 may be detachably coupled to the outer upper surface of the inner casing 120.

To this end, an exposure hole 121 through which the camera assembly 200 is exposed may be formed in the inner casing 120, and the camera assembly 200 may be installed such that at least a portion thereof is exposed to the interior of the storage compartment through the exposure hole 121.

Preferably, the surface of the camera assembly 200 exposed to the storage compartment may be positioned on the same surface as the inner surface of the inner casing 120. For example, the surface of the camera assembly 200 exposed to the storage compartment may be installed to have a height aligned with the upper surface of the interior of the inner casing 120. Of course, in consideration of assembly tolerances, the surface of the camera assembly 200 may be formed to protrude partially from or be partially recessed into the upper surface within the inner casing 120. Such assembly tolerances may be managed to be smaller than the vertical height of the base cover 220. That is, the surface (lower surface) of the camera assembly 200 may be installed to be aligned with the upper surface within the inner casing 120. Alternatively, the surface (lower surface) of the camera assembly 200 may be installed to be recessed into or protrude from the upper surface within the inner casing 120 by a height less than the vertical height of the base cover 220.

The lens 211 of the camera module 210, which constitutes the camera assembly 200, may be arranged to be parallel (i.e., horizontal) with the upper surface of the interior of the inner casing 120. For example, a direction in which the lens 211 of the camera module 210 faces may be perpendicular to the upper surface of the inner casing 120. That is, the lens 211 of the camera module 210 may not be installed to be inclined forward or backward, but may be installed to face in the height direction of the refrigerator.

Accordingly, the lens 211 of the camera module 210 may installed to face directly downward, thereby capturing images of items passing directly beneath the lens 211.

When the camera assembly 200 is installed on the outer surface (outer upper surface) of the inner casing 120, a coupling cover 122 for protecting the camera assembly 200 from foam (a filler filled between the outer casing and the inner casing) may be further included. The coupling cover 122 may be formed to cover the camera assembly 200 and configured to be coupled to the outer surface of the inner casing 120. It may be more preferable that the coupling cover 122 is detachably provided on the outer surface of the inner casing 120. Although not shown, the coupling cover 122 may be fixedly attached to the inner casing 120 by adhesive or adhesive tape.

The camera assembly 200 and the coupling cover 122 may be coupled to each other by using a hook structure. For example, as illustrated in the embodiment, a plurality of locking hooks 223 may be formed on the outer surface of the base cover 220, and locking recesses 123 may be formed on the inner surface of the coupling cover 122, so that the locking hooks 223 and locking recesses 123 may be hook-coupled to each other.

Although not illustrated, the camera assembly 200 and the coupling cover 122 may be coupled to each other through a separate fastening structure, such as screw fastening or attachment by using adhesive tapes.

Hereinafter, the process of installing the camera assembly 200 on the inner casing 120 will be described.

First, the coupling cover 122 may be installed on the inner casing 120.

The coupling cover 122 may be installed to cover the exposure hole 121 formed on an upper surface of the inner casing 120.

The coupling cover 122 may be fixed to the upper surface of the inner casing 120 by using various coupling structures such as screws, adhesive tapes, adhesive, or hooks.

Next, the camera assembly 200 may be prepared. The camera assembly 200 may be prepared as a single body by installing the camera module 210, the camera cover 230, and the discharge grille 240 on the base cover 220.

Furthermore, the camera assembly 200 prepared as described above may be coupled to the inner casing 120. The camera assembly 200 may be installed inside the inner casing 120 so as to pass through the exposure hole 121 formed in the inner casing 120 and be accommodated into the coupling cover 122.

Thus, the installation of the camera assembly 200 may be completed when the locking hooks 223 formed on the base cover 220 thereof are coupled to the locking recesses 123 formed on the inner surface of the coupling cover 122.

Alternatively, the camera assembly 200 may be inserted and installed inside the coupling cover 122 in advance, and then, together with the coupling cover 122, may be installed on the upper surface of the inner casing 120.

In this case, a portion of the camera assembly 200 (for example, a lower surface) may be installed so as to be exposed to the exposure hole 121 formed in the inner casing 120.

Accordingly, according to the aforementioned installation structure, the surface (lower surface) of the camera assembly 200 may be approximately aligned with the upper surface inside the inner casing 120 without protruding therefrom (i.e., protruding to an extent that the surface can be bumped or peripheral surface thereof can be clearly recognized), thereby preventing a deterioration in aesthetics from a design perspective.

Additionally, the camera assembly 200 may not protrude into the storage compartment, thereby preventing damage caused by items bumping into the camera assembly 200 during placing or removing the items into or from the storage compartment.

Next, a control process for placing items (food) to be stored in the refrigerator according to an embodiment of the present disclosure will be described.

First, the control part 300 may control the camera module 210 of the camera assembly 200 according to the opening and closing operation of the door 400.

That is, the control part 300 may control the camera module 210 for placing or removing food when it is confirmed that the door 400 is opened.

For example, to receive food, a user may open the door 400 and position the food at a specific location (the photo zone) or move the food through the photo zone.

When the food is placed in or passes through the photo zone, the control part 300 may recognize the placement of the food and control the camera module 210 to capture an image of the food in the photo zone.

In addition, the captured photograph or video of the food may be converted into an image by the image processing board (not shown), and the type of the food may be identified through automatic recognition. The food may also be recognized by capturing a barcode or QR code provided on the packaging of the corresponding food.

The image and information data of the identified food type may be stored in a data storage device (not shown). The control part 300 may assign a label to the information data, and on the basis of this label, the information data may be stored in the data storage device.

Subsequently, the control part 300 may display a screen for food placement on the display window 410 of the refrigerator and additionally receive detailed information about the food being received from a user via the display window 410. The received information data may be stored in the data storage device.

The data storage device may include at least one of a device that stores data possessed by the corresponding refrigerator and a device that stores data online in communication with the corresponding refrigerator.

The detailed information about the stored food received from the user may include at least one of the types of the food (e.g., food category), storage location, quantity, storage start date, expiration date, and notes. The control part may automatically recognize the food type and/or storage location through image recognition on the basis of images captured by the camera module, and may display a screen to receive input from a user when recognition fails or a recognition error occurs.

The image stored in the data storage device may be selectively displayed through the mobile terminal of a user or through a display window 410 provided on the corresponding refrigerator depending on the needs of the user.

When the food received, information data on the food to be stored, either recognized or input, may be stored in the data storage device. The detailed information (information data) on the stored food may be selectively displayed on the display window 410 or provided to a user terminal according to the request of a user.

The detailed information on the stored food may be input through a mobile terminal designated by a user.

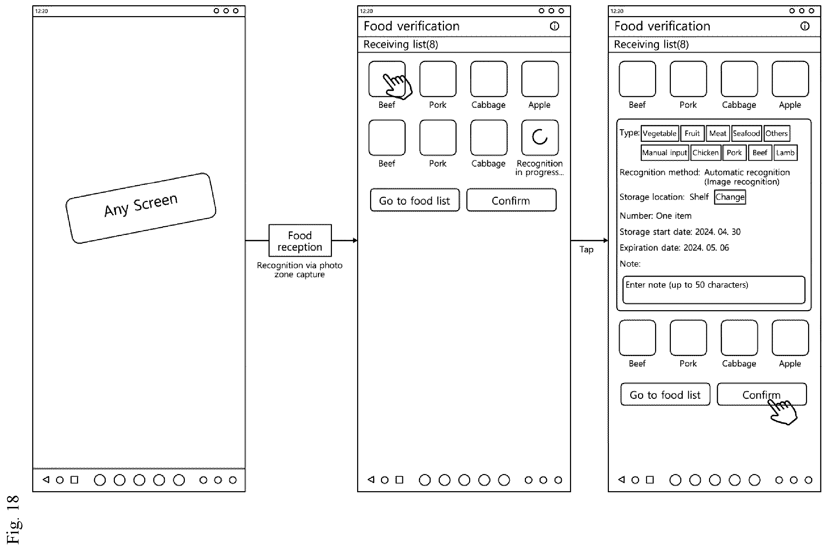

FIG. 18 illustrates an example of a display screen shown on the display window 410 of the refrigerator or on the mobile terminal of a user when food is received.

Meanwhile, when the image processing board of the control part 300 can accurately recognize information related to the food from the images captured by the camera module 210, a user may be allowed to verify only the accuracy of the information through the display screen.

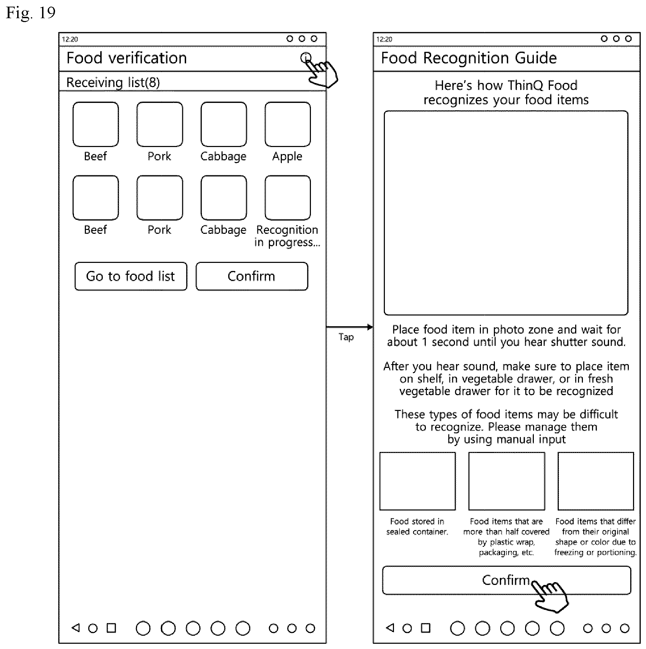

Additionally, the display screen may provide guidance on how to recognize food items being placed into the storage compartment. For example, as shown in FIG. 19, the display screen may provide simple guidance on how to photograph and manually input food items being placed.

Next, a control process for releasing stored items (food) out of the refrigerator according to an embodiment of the present disclosure will be described.

When items stored in the storage compartment of the refrigerator are to be released, a release list may be designated on the basis of the list of items that have been stored.

For example, when a user requests the release list through the display screen, the display screen may provide the stored item list to the user and request the user to select items to be released.

Then, after the items to be released are selected and the door 400 is opened, the images of the items may be captured to confirm the release of the items. The information on the released items may be continuously updated in the data storage device.

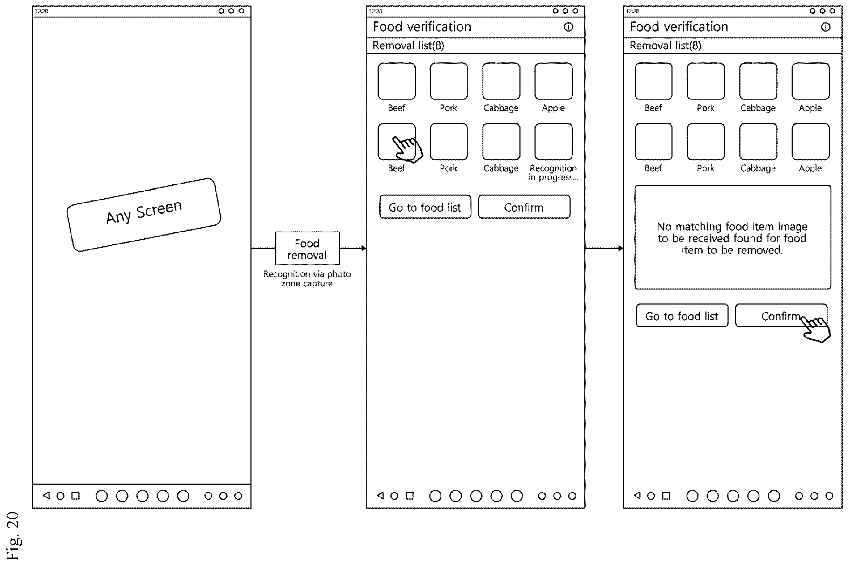

An example of the display screen provided on the display window 410 or a mobile device during such food release is shown in the attached FIG. 20.

Meanwhile, the refrigerator according to the present disclosure may provide recipes for dishes on the basis of information stored in the data storage device.

That is, the refrigerator may provide cookable dishes and their recipes on the basis of various types of food information stored in the data storage device.

As described above, according to the refrigerator according to the present disclosure, the surface (lower surface) of the camera assembly 200 may be installed to approximately align with the upper surface of the interior of the inner casing, thereby preventing deterioration in aesthetics of the interior of the storage compartment.

In addition, according to the refrigerator of the present disclosure, the camera assembly 200 may not protrude into the storage compartment, thereby preventing damage to the camera assembly caused by collision with items during placing or removing the items.

Meanwhile, the refrigerator of the present disclosure may be modified or altered in various forms other than the aforementioned embodiments. This will be described below for each example.

In one example of the refrigerator of the present disclosure, the camera assembly 200 may be installed to be recessed into the inner surface of the inner casing 120.

To this end, as shown in FIG. 16, the inner casing 120 may include a recessed portion 124 recessed to accommodate the camera assembly. The recessed portion 124 may be formed by molding a portion of the inner casing 120.

In this case, the camera assembly 200 may be mounted by being inserted into the recessed portion 124 inside the inner casing 120.

In addition, the locking recesses 123 may be formed in the recessed portion 124 so that the locking hooks 223 formed on the outer surface of the base cover 220 of the camera assembly 200 can be coupled thereto.

In particular, the camera assembly 200 may be installed such that the surface of the camera assembly 200 exposed to the storage compartment is positioned approximately on the same surface as the inner surface of other portions of the inner casing 120. This may prevent aesthetic degradation or the risk of damage caused by the camera assembly 200 excessively protruding into the storage compartment.

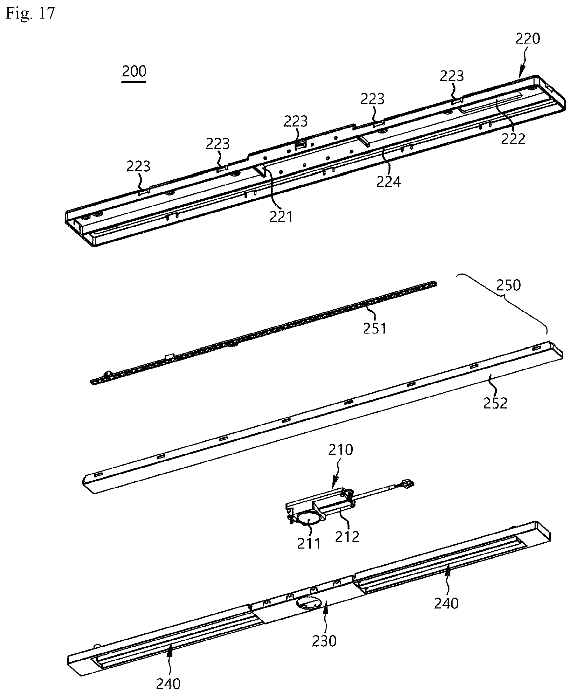

As another example of the refrigerator of the present disclosure, the camera assembly 200 may further include a structure for providing lighting during image capturing. For example, as shown in FIGS. 16 and 17, the camera assembly 200 may further include a first lighting module 250. Accordingly, lighting for image capture by the camera module 210 may be provided separately.

To this end, the base cover 220 of the camera assembly 200 may further include a second mounting portion 224, and the first lighting module 250 may be mounted on the second mounting portion 224. Accordingly, the first lighting module 250 and the camera module 210 may be provided as a single module.

The first lighting module 250 may include a substrate 251 having an LED, and a cover 252 that covers the substrate 251.

The second mounting portion 224 may be provided on either in front of (the entrance side of the storage compartment) or behind (the rear side of the interior of the storage compartment) the camera module 210 in the base cover 220. For example, the second mounting portion 224 may be positioned behind the camera module 210. That is, the first lighting module 250 may be located behind the camera module 210. Accordingly, lighting may be provided to the entire area of food items during image capturing by the camera module 210.

Although not shown, the first lighting module 250 may be positioned in front of the camera module 210, or may be positioned both in front of and behind the camera module 210.

As another example of the refrigerator of the present disclosure, as illustrated in FIG. 8 or FIG. 16, an insulation material 500 may be provided between the camera assembly 200 and the control part 300.

That is, the provision of the insulation material 500 may prevent heat generated in the control part 300 from affecting the camera assembly 200.

In particular, the control part 300 may be provided on the outer casing 110, and the camera assembly 200 may be provided on the inner casing 120. In consideration of this, foam may be filled therebetween, and the insulation material 500 may prevent the camera assembly 200 from being pressed and moving out of a proper position thereof due to the influence of the foam.

For example, a vacuum insulation panel (VIP) may be used as the insulation material 500.

In the above, all the components according to the embodiments of the present disclosure are described as being coupled to each other as one or being operated in the coupled state, but the present disclosure is not necessarily limited to the embodiments. That is, if it is within the scope of the present disclosure, at least one of all of the components may be selectively combined and operated. In addition, the terms such as "include", "compose", or "have" as described above means that the corresponding components can be inherent unless specifically stated to the contrary. Accordingly, it should be interpreted that other components are not excluded, but may further be included. All terms, including technical or scientific terms, have the same meaning as generally understood by those skilled in the art to which the present disclosure belongs, unless otherwise defined. Commonly used terms, such as terms defined in a dictionary, should be interpreted as being consistent with the contextual meaning of the related art, and are not to be interpreted as ideal or excessively formal meanings unless explicitly defined in the present disclosure.

The above explanation is merely an exemplary description of the technical idea of the present disclosure, and those skilled in the art to which the present disclosure belongs may make various modifications and variations without departing from the essential characteristics of the present disclosure. Accordingly, the embodiments disclosed in the present disclosure are intended to explain rather than limit the technical idea of the present disclosure, and the scope of the technical idea of the present disclosure is not limited by these embodiments. The scope of protection of the present disclosure should be interpreted by the claims below, and all technical ideas within the equivalent scope should be interpreted as being included in the scope of the claims of the present disclosure.

## Claims

1. A refrigerator comprising:
an outer casing constituting an exterior thereof,
an inner casing provided inside the outer casing and having a storage compartment provided therein;
a door configured to open and close the storage compartment of the inner casing; and
a camera assembly having a camera configured to capture images of items stored in the storage compartment or moved into and out of the storage compartment,
wherein the camera assembly is detachably provided on the inner casing while being positioned such that at least a portion of the camera assembly is exposed to the interior of the storage compartment, and
a surface of the camera assembly exposed to the storage compartment is positioned on the same surface as an inner surface of the inner casing.

2. The refrigerator of claim 1, wherein the inner casing has a recessed portion recessed to accommodate the camera assembly, and
the camera assembly is accommodated within the recessed portion.

3. The refrigerator of claim 1, wherein an exposure hole through which the camera assembly is exposed is formed in the inner casing, and
the camera assembly is installed such that at least a portion of the camera assembly is exposed to the interior of the storage compartment through the exposure hole.

4. The refrigerator of claim 3, wherein the camera assembly is installed on an outer surface of the inner casing such that at least a portion of the camera assembly is exposed to the interior of the storage compartment through the exposure hole.

5. The refrigerator of claim 4, further comprising:
a coupling cover provided on the outer surface of the inner casing so as to couple the camera assembly to the outer surface of the inner casing.

6. The refrigerator of claim 5, wherein the coupling cover is detachably provided on the outer surface of the inner casing.

7. The refrigerator of claim 1, wherein the camera assembly comprises:
a base cover having a first mounting portion provided in at least a portion thereof; and
a camera module installed on the first mounting portion of the base cover so as to capture an image.

8. The refrigerator of claim 7, wherein the first mounting portion is located at a central portion of the base cover.

9. The refrigerator of claim 7, wherein the base cover has an intake port formed to receive a portion of cold air supplied into the storage compartment.

10. The refrigerator of claim 9, wherein the base cover is provided with a discharge grille that guides discharge flow of air drawn in through the intake port.

11. The refrigerator of claim 10, wherein the discharge grille is provided on at least one side portion of the first mounting portion formed on the base cover.

12. The refrigerator of claim 7, wherein a second mounting portion is further formed on the base cover of the camera assembly,
wherein the second mounting portion is provided with a first lighting module that provides lighting during image capturing by the camera module.

13. The refrigerator of claim 12, wherein the second mounting portion is provided on one portion in front of or behind the camera module in the base cover.

14. The refrigerator of claim 7, wherein the camera assembly is provided on an upper surface of the interior of the inner casing, and
a second lighting module that provides lighting into the storage compartment is further provided on the upper surface of the inner casing.

15. The refrigerator of claim 14, wherein the camera assembly is located in front of the second lighting module.
